# EUROPÄISCHE PATENTSCHRIFT

(11) **EP 1 375 707 B1**
(45) Veröffentlichungstag und Bekanntmachung des Hinweises auf die Patenterteilung: **02.09.2009**
(21) Anmeldenummer: 03013625.3
(22) Anmeldetag: 16.06.2003
(51) Int. Cl.: D01F 9/22

(54) **Aktivierte Kohlenstofffasern und ihre Verwendung**
Activated carbon fibres and their use
Fibres de carbone activées et leur utilisation

(30) Priorität: 17.06.2002 DE 10226969
(43) Veröffentlichungstag der Anmeldung: 02.01.2004
(73) Patentinhaber: SGL Carbon SE, 65203 Wiesbaden (DE)
(72) Erfinder: Heine, Michael, Dr., 86695 Allmannshofen (DE); Zimmermann-Chopin, Rainer, Dr., 89191 Nellingen (DE); Neuert, Richard, Dr., 86637 Hohenreichen/Wertingen (DE)

(56) Entgegenhaltungen:
- EP-A- 0 378 381
- EP-A- 0 394 449
- DE-A- 3 036 460

## Beschreibung

Die Erfindung betrifft aktivierte poröse Kohlenstofffasern insbesondere zur Adsorption oder Trennung von gasförmigen Substanzen gemäß Anspruch 1 sowie ein Verfahren zu deren Herstellung gemäß Anspruch 10.

Die Herstellung von aktivierten Kohlenstofffasern durch Oberflächenbehandlung von Kohlenstofffasern ist bereits seit längerem bekannt. Im allgemeinen werden Precursormaterialien aus Polyacrylnitril (PAN) oder Pech aufgrund der guten mechanischen und Adsorptionseigenscharten der hieraus erhältlichen Kohlenstofffasern bevorzugt eingesetzt. Die Herstellung von aktivierten Kohlenstofffasern auf der Basis von Polyacrylnitrilprecursoren beginnt zunächst mit der für Kohlenstofffasern üblichen Stabilisierung in Luft bei ca. 230-300 °C. Hierdurch wird durch chemische Umwandlung des Polyacrylnitrils eine unschmelzbare Faser gebildet. Die resultierende oxidierte Faser kann direkt aktiviert oder häufiger zunächst zu einem Textilgebilde weiterverarbeitet werden. Die Aktivierung der Fasern erfolgt üblicherweise durch eine Erhitzung auf Temperaturen oberhalb ca. 1200 °C, die im Gegensatz zum Prozess für konventionelle Kohlenstofffasern nicht in einer inerten Atmosphäre durchgeführt wird, sondern in einer oxidierenden. Typische Oxidationsmittel dieses Prozessschrittes sind H₂O oder CO₂. Die Reaktion der Oxidationsmittel führt zu einem starken Angriff der Faseroberfläche, wodurch eine poröse Oberfläche gebildet wird. Die Größe der spezifischen Oberfläche und die Konfiguration der Kohlenstoffatome innerhalb der Oberflächenporen bestimmen im wesentlichen die Selektivität und Stärke der Adsorption von chemischen Substanzen durch die aktivierte Kohlenstofffaser. Die Aktivierung der auf der Basis von Pechprecursoren hergestellten Kohlenstofffasern erfolgt in ähnlicher Weise durch Oberflächenoxidation der carbonisierten Faser.

Die Herstellung von Membranen besonders hoher spezifischer Oberfläche unter Verwendung von porösen Fasern wird in EP 0 394 449 A1 beschrieben. Die Membranen werden durch poröse Kohlenstoff-Hohlfasern gebildet. Das Herstellungsverfahren sieht vor, Polymermischungen aus PAN-basiertem Polymer A und durch Temperatur zersetzbarem (poyrolysierbarem) Polymer B, gegebenenfalls mit Lösungsmittel und Lösungsvermittler, zu hohlen Polymerfasern zu verspinnen. Die Hohlform wird beispielsweise durch Verwendung von Schlitzdüsen erreicht, wobei der Innendurchmesser der Fasern bei einigen 100 µm liegt. Die Porosität der Hohlfasern bildet sich durch die Zersetzung des Polymers B aus. Das Polymer B zersetzt sich bei Temperaturen unterhalb 600 °C. Als Polymere werden insbesondere Vinyl-, und Methacrylat-Polymere aufgeführt. Deren spezifische Viskosität wird mit bevorzugt im Bereich von 0,1 bis 0,4 angegeben.

Den Aufbau eines Adsorptions/Desorptionsmoduls aus aktivierten Kohlenstofffasern beschreibt die US 6,364,936 B1. Ein oder mehrere Hohlelemente aus aktiviertem Kohlenstoff-Fasergewebe sind der Länge nach angeordnet. Die Faserelemente werden durch elektrischen Strom direkt beheizt, um eine selektive Adsorption von Komponenten aus dem Gasstrom und deren nachfolgende Desorption durchführen zu können.

Gegenüber dem Stand der Technik ist es Aufgabe der Erfindung, die spezifische Oberfläche, die Aktivität und die Selektivität der Kohlenstofffasern zu erhöhen.

Die Aufgabe wird erfindungsgemäß dadurch gelöst, dass die Poren der Kohlenstofffasern zumindest teilweise, das heißt zu mindestens 30 Vol%, durch aktive Stoffe gefüllt sind. Die aktiven Stoffe werden durch Kohlenstoff, Metalle, und/oder Metallcarbide gebildet, wobei diese aus der Carbonisierung von organischen oder metallorganischen Polymeren, welche bereits in der Precursorfaser zur Herstellung von Kohlenstofffasern feinverteilt vorliegen, hervorgehen. Die Aktivierung der Kohlenstofffasern erfolgt demzufolge durch die Erzeugung von teilweise mit Kohlenstoff-, Metall- und/oder Metallcarbid gefüllten Poren, wobei diese aktiven Zentren durch die Carbonisierung von Partikeln eines organischen oder metallorganischen Polymers, die in der durch Polyacrylnitrilpolymer gebildeten Kohlenstoff-Precursorfaser verteilt sind, gebildet werden. In besonders vorteilhafter Weise muß das eingangs beschriebene Herstellverfahren für Kohlenstofffasern hierzu nicht wesentlich verändert werden. Die erfindungsgemäßen Kohlenstofffasern eignen sich insbesondere zur Adsorption oder Trennung von Gasen.

Das Verfahren sieht vor, Mischpolymere aus einem auf Polyacrylnitril (PAN) basierenden Precursor für Kohlenstofffasern (Polymer A) und einem carbonsierbaren Polymer (Polymer B) zu Mischfasern zu verspinnen, eine Stabilisierung durchzuführen und die Fasern hierauf zu fertig aktivierten Kohlenstofffasern zu carbonisieren. Das Polymer B ist hinsichtlich Löslichkeit und Partikelgröße so gewählt, dass es als feinverteilt, beziehungsweise mikrodispers, in der PAN-basierten Faser vorliegt. Bei der Carbonisierung wird aus dem PAN-basierten Anteil das Gerüst der Kohlenstofffaser gebildet, während das Zersetzungsprodukt des Polymers B als hochporöses und aktives Material zurückbleibt und zumindest teilweise gefüllte Poren in und auf der Kohlenstofffaser ausbildet. Je nach anfänglicher Zusammensetzung des Polymers B können hierdurch auch unterschiedliche Kohlenstoffreste, Metalle, oder Metallcarbide erhalten werden, welche gegenüber unterschiedlichen Adsorbaten verschiedene Selektivitäten aufweisen.

Im Gegensatz zum genannten Stand der Technik ist wesentlich, dass das Polymer B nur teilweise zersetzt wird, so dass dessen fester und nichtflüchtiger Rückstand als aktive Substanz in der Faser verbleibt. Die aktiven Zentren der aktivierten Kohlenstofffasern werden somit im wesentlichen durch die festen Zersetzungsprodukte des Polymers B gebildet. Durch die Wahl des Polymers B, insbesondere im Zusammenhang mit metallorganischen Komponenten oder Heteroatomen, können gezielt unterschiedliche Selektivitäten in die aktivierte Faser eingeführt werden.

Im einzelnen sieht das Verfahren die folgenden Schritte vor:
a) Herstellung einer Spinnmischung enthaltend PAN-basiertes Polymer A und ein organisches oder metallorganisches Polymer B
b) Verspinnen der Mischung zu Mischfasern aus Polymer A und Polymer B
c) Oxidieren der Mischfasern
d) Carbonisieren oder Graphitieren der Mischfasern unter nicht-oxidierenden Bedingungen derart, dass eine zumindest teilcarbonisierte Kohlenstoffaser gebildet wird und das Polymer B einen Kohlenstoff- und/oder Metall- und/oder Metallcarbid-Rückstand von mindestens 25 Gew% bildet.

Als Polymer A werden die für die Herstellung von Kohlenstofffasern marktüblichen PAN-basierten Polymere, auch Precursoren genannt, eingesetzt. Sie sind typischerweise als Copolymere aus über 90 mol% Acrylnitrileinheiten, sowie weiteren Comonomereinheiten aufgebaut.

Als Polymer B wird ein carbonisierbares organisches oder metallorganisches Polymer eingesetzt, dessen Carbonisierungsrückstand mindestens bei 22 Gew% und bevorzugt oberhalb 30 Gew% liegt. Unter Carbonisierungsrückstand ist derjenige Rückstand des Polymers B in Gew% zu verstehen, welcher sich bei den Bedingungen der Carbonisierungsbehandlung der entsprechenden Mischfaser ergibt. Dies sind Temperaturen oberhalb 500 °C unter nicht-oxidierenden Bedingungen.

Vorzugsweise liegt der Carbonisierungsrückstand des Polymers B unterhalb desjenigen des PAN-basierten Polymers. Führt die stärkere Pyrolyse bei Polymer B zu einer größeren Volumenschwindung als beim Precursormaterial aus Polymer A, dann werden hierdurch geöffnete Poren gebildet. Besonders bevorzugt werden aber Polymere B eingesetzt, die bei der Carbonisierung eine vergleichsweise geringe Volumenschwindung zeigen. Hierdurch bleiben die Bereiche aus carbonisiertem Polymer B mikroporös und vergrößern die spezifische Oberfläche der Faser in vorteilhafter Weise. Die Poren in der Trägerfaser werden zumindest teilweise durch die im allgemeinen mikroporösen Zersetzungsprodukte des Polymers B aufgefüllt. Erfindungsgemäß sind die Poren zu mindestens 30 Vol% und besonders bevorzugt zu mindestens 50 Vol% mit den gegebenenfalls mikroporösen Zersetzungsprodukten gefüllt.
Typischerweise liegt der Gehalt an Polymer B unterhalb 50 Gew% der Polymermischung aus A und B und bevorzugt im Bereich von 3 bis 40 Gew%.

Voraussetzung für die Ausbildung diskreter Bereiche aus Rückständen der Carbonisierung von Polmer B ist, dass das Polymer B bereits in der Mischfaser feinverteilt oder mikrodispers vorliegt. Die Partikelgröße des Polymers B sollte 50% des Faserdurchmessers der hiermit gewonnenen Mischfaser nicht überschreiten. Vorzugsweise liegt der mittlere Durchmesser der einzelnen Partikel des Polymers B unterhalb 1500 nm und besonders bevorzugt unterhalb 800 nm. Die nach der Carbonisierung der Fasern gebildeten teilweise gefüllten Poren sollten einen mittleren Mindestdurchmesser nicht unterschreiten. Dieser Mindestdurchmesser liegt bei ca. 30 nm.

Eine mikrodisperse Verteilung ist insbesondere dann gewährleistet, wenn das Polymer B eine geringe oder gar keine Löslichkeit in der PAN-Spinnlösung besitzt. Übliche PAN-Spinnlösungen für den Nass- oder den Trockenspinn-Prozess sind lösungsmittelhaltig. Erfindungsgemäß werden daher Polymere B bevorzugt, die in dem verwendeten Lösungsmittel unlöslich sind.

Die Polymere B sollen einen Schmelzpunkt oberhalb der Prozesstemperatur der Oxidation der Mischfaser aufweisen. Bevorzugt werden Harze, oder Polymere die zu unschmelzbaren Verbindungen vernetzen. Beispiele für geeignete organische Polymere B sind unter anderem Polyester, Phenolharze, Polyamide, Polyaramide, Copolyaramide, Paraaramide, oder Cellulose.

Unter den metallorganischen Polymeren sind solche Verbindungen zu verstehen, bei denen Metallatome sowohl direkt in die Polymerkette eingebaut sind, als auch diejenigen bei denen die Metallatome komplex, insbesondere an Heteroatome, wie O oder N gebunden sind. Im letzteren Fall treten insbesondere Carboxyl-, Carbonyl- und Imingruppen auf. Zu den metallorganischen Polymeren sind im Sinne der Erfindung auch komplexe organische Metallsalze zu zählen, die in hochmolekularer Form aggregiert vorliegen. Zu den erfindungsgemäßen metallorganischen Polymeren zählen unter anderem Polyacetate, polymere Cyclopentadienyle, oder polymere Alkoholate oder Acetylacetonate.

Bevorzugte Metallkomponenten der metallorganischen Polymere sind die Übergangsmetalle, insbesondere der ersten Reihe, sowie die Platinmetalle. Diese zeichnen sich in atomarer Form oder als carbidische Verbindung durch hohe chemische Aktivität aus und begründen eine hohe und teils sehr selektive Adsortionsfähigkeit. Besonders bevorzugt sind metallorganische Verbindungen oder komplexe organische Verbindungen der Elemente Ti, Cr, W, Fe, Co, Ni, Pd und Pt.
Gemäß einer weiteren vorteilshaften Ausgestaltung der Erfindung kann das metallorganische Polymer B auch weiteres Metall in elementarer Form enthalten, wodurch der Gehalt an aktiven Bereichen der Faser weiter erhöht werden kann. Bevorzugt werden dabei harzgebundene Metallmikropulver der Elemente Ti, Cr, Fe, oder Pt verwendet.

Der Carbonsierungsrückstand der metallorganischen Verbindungen besteht typischerweise aus einer Mischung von Kohlenstoff, Metall und Metallcarbid in wechselnder Zusammensetzung. Bevorzugt liegt der Carbonisierungsrückstand der eingesetzten Verbindung bei über 25 Gew%, besonders bevorzugt oberhalb 35 Gew%.

Beim Verspinnen der Mischung zu Mischfasern aus Polymer A und Polymer B können die bekannten Verfahren des Nass- oder Trockenspinnens angewendet werden. Insbesondere bei der Verwendung von Spinnmischungen, die metallorganisches Polymer B in Form komplexer organischer Salze enthalten, ist das Trockenspinnen bevorzugt. Beim Nasspinnen besteht dagegen die Gefahr, dass das Spinnbad (Koagulationslösung) vermehrt Metallverbindungen aus der Faser wieder herauslöst.

Der Faserdurchmesser der erfindungsgemäßen Mischfasern nach dem Spinnprozess liegt unterhalb 200 µm, wobei der Bereich zwischen 10 bis 30 µm, wie er für PAN-Fasern, die als Precursormaterial für konventionelle Kohlenstofffasern üblich ist, bevorzugt wird. Die dicken Fasern, oberhalb ca. 60 um, sind gegebenenfalls auch als Profilfasern auszuführen, da hierdurch deren Oberfläche weiter vergrößert wird.

Im nächsten Verfahrensschritt der Stabilisierung werden die Mischfasern unschmelzbar gemacht. Dies geschieht durch eine Oxidation bei Temperaturen von vorzugsweise 230 bis 300 °C. In bekannter Weise findet hierbei durch eine Dehydrierung und Cyclisierung auf molekularer Ebene eine Stabilisierung des Polyacrylnitrils statt, die das Polymer unschmelzbar und carbonisierbar macht.

Auch die Polymere B liegen zumindest nach diesem Prozessschritt in unschmelzbarer Form vor. Gegebenenfalls findet die zur Stabilisierung führende Vernetzung des Polymers B ebenfalls erst in diesem Verfahrensschritt statt. Eine Nachvernetzung wird zum Beispiel bei Polyestern oder Phenolharzen beobachtet. Eine bevorzugte Temperaturbehandlung der Stabilisierung sieht das Aufheizen an Luft auf 230°C mit einer Haltezeit von ca. 140 Minuten mit einer Heizrate von ca. 5°C/Minute vor. Kürzere Prozesszeiten können durch höhere Temperaturniveaus ermöglicht werden, beispielsweise ca. 60 Minuten bei ca. 270°C.

Werden metallorganische Verbindungen als Polymer B eingesetzt, so ist ein isothermes Temperaturprofil bei möglichst niedriger Temperatur vorzuziehen, denn eine Überhitzung der Faser unter oxidierenden Bedingungen ist zu vermeiden, da die Gefahr der Oxidation der metallorganischen Verbindungen zu im allgemeinen nicht erwünschten Metalloxiden besteht.

Im letzten Schritt der Faserherstellung findet die Umsetzung der stabilisierten Mischfaser zur aktivierten Kohlenstofffaser statt. Dies wird durch eine Carbonisierung oder Graphitierung erreicht, wobei der Unterschied zwischen Carbonisierung und Graphitierung fließend ist. Die Carbonisierung findet bei Temperaturen vorzugsweise höher als 500°C, insbesondere im Bereich von 900 bis 1400°C statt, die Graphitierung bei höheren Temperaturen, insbesondere im Bereich von 1600 bis 2200 °C. Die Temperaturbehandlung erfolgt unter sauerstofffreien Bedingungen, wie beispielsweise unter einer N₂-Schutzgasatmosphäre.

Bei Temperaturen knapp oberhalb 500°C findet nur eine teilweise Carbonisierung des Precursorpolymers statt, so dass teilcarbonisierte Fasern erhalten werden. Im Gegensatz zu den Kohlenstofffasern die zum Teil bei deutlich höheren Carbonisierungstemperaturen erhalten werden, besitzen die teilcarbonisierten Fasern noch vergleichsweise hohe Gehalte an Heteroatomen, insbesondere an Nitrilgruppen. Das gleiche gilt in analoger Weise auch für die Zersetzungsprodukte des Polymers B, sofern von stickstoffhaltigen Polymeren ausgegangen wurde. Diese Nitrilgruppen tragen als polare Gruppen zur Gesamtaktivität der Faseroberfläche bei.

Es ist daher möglich, in einfacher Weise auch aktivierte teilcarbonisierte Fasern herzustellen. Teilcarbonsierte Fasern besitzen unter anderem eine verringerte thermische Leitfähigkeit, wodurch sie gegenüber den Kohlenstofffasern bei Anwendungen mit der Forderung guter thermischer Isolation im Vorteil sind. Auch solche teilcarbonsierte Fasern werden im folgenden zusammenfassend als Kohlenstofffasern bezeichnet.

Im Falle der Verwendung metallorganischer Polymere B unterstützt eine Graphitierungsbehandlung die Bildung stabiler kristalliner Metallverbindungen, insbesondere der Metallcarbide. Im allgemeinen nimmt aber die Aktivität, insbesondere reiner Kohlenstoffbereiche hierdurch ab.

Ein weiterer Aspekt der Erfindung ist die Verwendung der aktivierten Fasern zur Trennung von Gasgemischen und zur Adsorption von gasförmigen Substanzen. Dabei ist insbesondere an die Abtrennung von CO₂ gedacht. Eine typische Vorrichtung zur Abtrennung von gasförmigen Substanzen, insbesondere auch CO₂, ist aus zwei Modulen aufgebaut, die im Wechsel die Funktion der Adsorption gefolgt von der Desorption ausüben. Die Beheizung der Module kann dabei in vorteilhafter Weise über die elektrische Leitfähigkeit der Kohlenstofffasern bewerkstelligt werden.

Als weitere Verwendung ist der Aufbau von Filtermodulen vorgesehen, beispielsweise in der chemischen Industrie. Das Fasermaterial kann ebenso als Bestandteil von aktivierter und gegebenenfalls thermisch isolierender Schutzbekleidung eingesetzt werden. Durch die Verwendung aktivierter Fasern kann die Schutzbekleidung die zusätzliche Funktion der Adsorption von Schadstoffen erfüllen. Für textile Anwendungen sind die teilcarbonsierten Fasern gegenüber den Kohlenstofffasern im Vorteil, da die textile Verarbeitbarkeit und der Tragekomfort der Kleidung deutlich besser sind.

## Patentansprüche

1. Poröse PAN-basierte Kohlenstofffasern, welche an ihrer Oberfläche und im Inneren Poren aufwersen,
**dadurch gekennzeichnet, dass**
die Poren der Kohlenstofffasern zu mindestens 30 Vol-% mit Kohlenstoff, Metallen und/oder Metallcarbiden gefüllt sind, die durch Carbonisierung von Partikeln eines organischen oder metallorganischen Polymers, welches bereits in der PAN-Precursorfaser zur Herstellung der Kohlenstofffaser feinverteilt oder mikrodispers vorliegt, erzeugt worden sind.

2. Poröse Kohlenstofffasern nach Anspruch 1, **dadurch gekennzeichnet, dass** der feste nichtflüchtige Rückstand Metalle oder Metallcarbide aus der Carbonisierung metallorganischer Polymere enthält.

3. Kohlenstofffasern nach Anspruch 2, **dadurch gekennzeichnet, dass** der Metallgehalt aus Metall- und/oder Metallcarbid-Rückständen oberhalb 2 % der Fasermasse liegt.

4. Kohlenstofffasern nach Anspruch 2, **dadurch gekennzeichnet , dass** die Poren wenigstens eines der Metalle B, Si, Ti; Cr, W, Fe, Co, Ni, Pd, Pt und/oder deren Carbide enthalten.

5. Kohlenstofffasern nach Anspruch 1 bis 4, **dadurch gekennzeichnet, dass** die Poren zu mindestens 30 Vol% mit Rückständen aus der Carbonisierung von organischen Polymeren gefüllt sind.

6. Kohlenstofffasern nach einem der Ansprüche 1 bis 5, **dadurch gekennzeichnet; dass** das Material, mit dem die Poren teilweise gefüllt sind, mikroporös ist.

7. Kohlenstofffasern nach einem der Ansprüche 1 bis 6, **dadurch gekennzeichnet, dass** die Poren wenigstens an der Oberfläche einen mittleren Durchmesser größer als 30 nm aufweisen.

8. Verwendung von aktivierten porösen Kohlenstofffasein nach mindestens einem der Ansprüche 1 bis 7 zur Abtrennung von CO₂ aus Grasgemischen.

9. Verwendung von aktivierten porösen Kohlenstofffasern nach mindestens einem der Ansprüche 1 bis 7 als Bestandteil von Filtermodulen oder von Schutzbekleidung.

## Claims

1. Porous PAN-based carbon fibres which have pores on their surface and inside, **characterised in that** the pores of the carbon fibres are filled to at least 30% by volume with carbon, metals and/or metal carbides that have been produced by means of carbonization of particles of an organic or metallo-organic polymer which is already present in a finely distributed or microdispersed manner in the PAN precursor fibre for the production of the carbon fibre.

2. Porous carbon fibres according to claim 1, **characterised in that** the solid non-volatile residue contains metals or metal carbides from the carbonization of metallo-organic polymers.

3. Carbon fibres according to claim 2, **characterised in that** the metal content of metal and/or metal carbide residues is above 2 wt% of the fibrous mass.

4. Carbon fibres according to claim 2, **characterised in that** the pores contain at least one of the metals B, Si, Ti, Cr, W, Fe, Co, Ni, Pd, Pt and/or the carbides thereof.

5. Carbon fibres according to claims 1 to 4, **characterised in that** the pores are filled to at least 30% by volume with residues from the carbonization of organic polymers.

6. Carbon fibres according to one of claims 1 to 5, **characterised in that** the material, with which the pores are partly filled, is microporous.

7. Carbon fibres according to one of claims 1 to 6, **characterised in that** the pores at least on the surface have an average diameter that is greater than 30 nm.

8. Use of activated porous carbon fibres according to at least one of claims 1 to 7 for the separation of CO₂ from gas mixtures.

9. Use of activated porous carbon fibres according to at least one of claims 1 to 7 as a component part of filter modules or protective clothing.

## Revendications

1. Fibres de carbone, poreuses à base de polyacrylnitrile PAN, ayant des pores sur leur surface et dans la masse,
**caractérisées en ce que**
les pores des fibres de carbone sont remplies au moins à 30 % en volume de carbone, de métaux et/ou de carbures métalliques obtenus par carbonisation de particules d'un polymère organique ou métallo organique, qui existent déjà dans les fibres de précurseur PAN, de manière finement réparties pour la fabrication de fibres de carbone, ou sous forme de micro-dispersion.

2. Fibres de carbone, poreuses selon la revendication 1,
**caractérisées en ce que**
le résidu solide non volatil contient des métaux ou des carbures métalliques provenant de la carbonisation de polymères métallo organiques.

3. Fibres de carbone, poreuses selon la revendication 2,
**caractérisées en ce que**
la teneur en métal de résidus de métaux et/ou de carbures métalliques est supérieure à 2 % de la masse de fibres.

4. Fibres de carbone, poreuses selon la revendication 2,
**caractérisées en ce que**
les pores contiennent au moins l'un des métaux B, Si, Ti, Cr, W, Fe, Co, Ni, Pd, Pt et/ou des carbures de ces métaux.

5. Fibres de carbone, poreuses selon les revendications 1 à 4,
**caractérisées en ce que**
les pores sont remplies jusqu'à au moins 30 % en volume de résidus de carbonisation de polymères organiques.

6. Fibres de carbone, poreuses selon l'une des revendications 1 à 5,
**caractérisée en ce que**
la matière servant à remplir au moins partiellement les pores est une matière microporeuse.

7. Fibres de carbone, poreuses selon l'une des revendications 1 à 6,
**caractérisées en ce que**
au moins en surface les pores ont un diamètre moyen supérieur à 30 nm.

8. Utilisation de fibres de carbone poreuses, activées selon au moins l'une des revendications 1 à 7,
pour séparer le CO₂ de mélanges de gaz.

9. Utilisation de fibres de carbone, poreuses, activées selon au moins l'une des revendications 1 à 7,
comme composant de modules de filtre ou de vêtements de protection.
